# EUROPEAN PATENT APPLICATION

(11) **EP 4 787 547 A1**
(43) Date of publication of application: **05.08.2026**
(21) Application number: 25155005.9
(22) Date of filing: 30.01.2025
(51) Int. Cl.: H01M 10/625, H01M 10/658, H01M 50/204, H01M 50/249, H01M 50/271, H01M 50/289, H01M 50/342, H01M 50/358, H01M 50/367

(54) **VENTING ARRANGEMENTS FOR BATTERY ARRAYS**

(71) Applicant: Ford Global Technologies, LLC, Dearborn, MI 48126 (US)
(72) Inventor: COX, David, London, SE16 5XJ (GB); ETHERIDGE, Paul, Crowborough, TN6 2EA (GB); PETRIDIS, Themi, Bishop's Stortford, CM23 3NG (GB); STOTHARD, Christopher, Billericay, CM11 2DR (GB)
(74) Representative: HG Law International LLP

(57) **Abstract**

Provided herein is a battery array comprising a housing with a base and sidewalls shaped to receive and house battery cells. The battery cells within the battery array are organized into cell groups, with an insulating layer positioned between each group. A sheet of silicate material, which includes a frangible portion above each cell group, covers the battery cells. A vent plate, positioned on top of the sheet of silicate material, encloses the sheet substantially between the vent plate and the battery cells. The vent plate is equipped with vent channels that align with the respective frangible portions of the sheet of silicate material.

## Description

### FIELD OF INVENTION

The present disclosure relates to battery arrays, and more particularly to a battery array, battery pack, and vehicle incorporating venting arrangements for directing fluid flow away from battery cells.

### BACKGROUND

Battery packs comprising multiple battery cells are widely used in various applications, including electric vehicles and energy storage systems. These battery packs typically contain numerous lithium-ion cells arranged in arrays or modules to provide the desired voltage and capacity. As the demand for higher energy density and longer-range electric vehicles increases, battery packs are being designed with more cells and higher energy capacities.

It is desirable to enhance the design and operation of high-capacity battery packs. In some instances, battery cells can potentially generate heat and gases. If not properly managed, this thermal and gas generation can lead to cascading thermal events affecting neighboring cells, potentially compromising the integrity of the battery pack.

Conventional battery pack designs often incorporate basic venting mechanisms to release gases. However, these designs may not adequately prevent heat and gas from affecting adjacent cells or spreading to other areas of the battery pack. The close proximity of cells in densely packed arrays can exacerbate the risk of thermal propagation between cells and modules.

Additionally, many existing venting arrangements do not provide sufficient directional control over the flow of hot gases away from sensitive areas of the battery pack. This can result in areas of heat buildup, further increasing the risk of thermal runaway events spreading to other cells or modules.

### SUMMARY OF INVENTION

This Summary is provided to introduce a selection of concepts in a simplified form that are further described below in the Detailed Description.

In a first aspect, a battery array is provided. The battery array includes a housing and battery cells, the housing having a base and sidewalls shaped to receive and house the battery cells, wherein the battery cells of the battery array are divided into cell groups and an insulating layer is provided between each group of battery cells in the battery array, and wherein the battery array further comprises a sheet of silicate material which covers the battery cells, the sheet of silicate material including a frangible portion above each cell group, the battery array further comprising a vent plate positioned on top of the sheet of silicate material such that the sheet of silicate material is substantially enclosed between the vent plate and the battery cells, wherein the vent plate includes vent channels which are aligned with respective frangible portions of the sheet of silicate material.

This configuration provides improved thermal management for the battery array. The insulating layers between cell groups help prevent thermal propagation between groups, while the frangible portions of the silicate sheet allow for controlled venting. The vent plate with aligned channels further directs any vented gases away from the cells, reducing the risk of thermal runaway.

The battery array may further comprise an array cover positioned on top of the vent plate such that the vent plate is substantially enclosed between the sheet of silicate material and the array cover, the array cover comprising apertures which are substantially aligned with open ends of the vent channels of the vent plate.

This additional layer provides further protection and controlled venting, ensuring that any gases or materials released during a thermal event are directed away from the battery cells and out of the battery array in a predetermined manner.

The apertures of the array cover may be provided in a side surface of the array cover.

Positioning the apertures on the side surface of the array cover allows for efficient lateral venting, which can be advantageous in certain battery pack configurations.

Alternatively, the apertures of the array cover may be provided in a top surface of the array cover.

Top surface apertures can be beneficial in situations where vertical venting is preferred or where the battery array's placement within a larger system necessitates upward gas evacuation.

The vent channels of the vent plate may be shaped to direct fluid flow away from the battery array.

This feature enhances the battery array by ensuring that gases or materials are efficiently directed away from the cells, reducing the risk of secondary thermal events.

The vent channels of the vent plate may be substantially L-shaped.

The L-shaped design of the vent channels provides an efficient path for gas evacuation, changing the direction of flow to better direct gases away from the battery cells and towards the designated venting areas.

The apertures of the array cover may be positioned to direct fluid flow away from the battery array.

This alignment of the apertures with the vent channels creates a continuous path for gas evacuation, further enhancing the battery array.

The sheet of silicate material may be a mica sheet.

Mica provides excellent thermal insulation and electrical isolation properties, making it an ideal material for this application.

The insulating layer between each group of battery cells may comprise a silicate material.

Using a silicate material for the insulating layers provides effective thermal and electrical isolation between cell groups, enhancing the battery array.

The silicate material of the insulating layer between each group of battery cells may comprise mica.

Mica's natural properties make it an excellent choice for insulation between cell groups, providing both thermal and electrical isolation.

The insulating layer between each group of battery cells may be provided between groups of three or four battery cells.

This grouping strategy allows for effective thermal management while maintaining an efficient overall battery array design.

Each frangible portion of the sheet of silicate material may comprise a burst region.

The inclusion of burst regions in the frangible portions ensures controlled and predictable venting, enhancing the battery array.

In a second aspect, a battery pack comprising the battery array of the first aspect is provided.

Incorporating the battery array into a battery pack allows for thermal management features to be utilized in larger energy storage systems.

The battery pack may comprise the battery array wherein the apertures of the array cover are further configured to direct fluid flow away from the battery pack.

This configuration extends the enhanced features of the individual battery array to the entire battery pack, ensuring that vented gases are directed away from all components of the system.

In a third aspect, a vehicle comprising the battery pack of the second aspect is provided.

Integrating the battery pack into a vehicle allows for the enhanced features to be utilized in electric or hybrid electric vehicles, enhancing overall vehicle performance.

### BRIEF DESCRIPTION OF FIGURES

Embodiments of the invention will be described, by way of example, with reference to the following drawings, in which:
FIG. 1 illustrates a top view of a known battery venting arrangement, according to aspects of the present disclosure.
FIG. 2 illustrates an isometric view of a battery array, according to aspects of the present disclosure.
FIGS. 3A-3B illustrate orthogonal top views of a battery array assembly in different configurations, according to aspects of the present disclosure.
FIGS. 4A-4B illustrate isometric and side views of a venting system for a battery array, according to aspects of the present disclosure.
FIGS. 5A-5C illustrate orthogonal top views of three different vent configurations for an array casing, according to aspects of the present disclosure.
FIGS. 6A-6D illustrate isometric views of different configurations of battery array vent plates, according to aspects of the present disclosure.
FIG. 7 illustrates a side view outline of a vehicle with a battery pack, according to aspects of the present disclosure.

Common reference numerals are used throughout the figures to indicate similar features.

### DETAILED DESCRIPTION

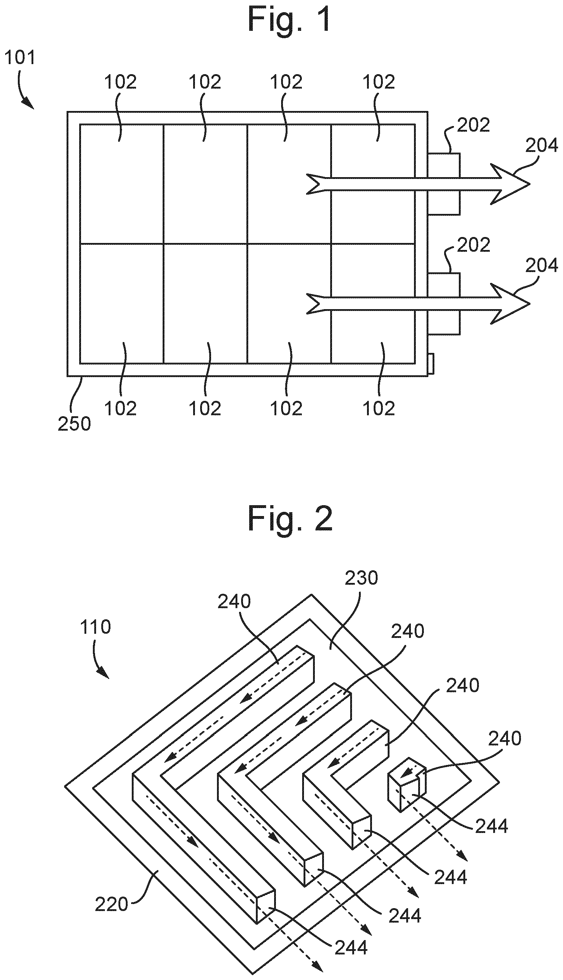

A battery array 110 comprises an array casing 220 that forms a housing with a base and sidewalls shaped to receive and house battery cells. The battery array 110 may be incorporated into a battery pack 250. FIG. 2 illustrates an isometric view of the battery array 110.

The battery array 110 includes a vent plate 230 positioned on top of a sheet of silicate material (not shown in FIG. 2). The vent plate 230 includes multiple vent channels 240 arranged in a parallel configuration. These vent channels 240 are aligned with respective frangible portions of the sheet of silicate material. The vent channels 240 are depicted as elongated, L-shaped structures that extend across the surface of the vent plate 230.

At the end of each vent channel 240, an aperture 244 is visible. These apertures 244 are positioned along the edge of the vent plate 230, aligning with the termination points of the vent channels 240. The apertures 244 may serve as exit points for fluid directed through the vent channels 240.

An array cover (not shown in FIG. 2) may be positioned on top of the vent plate 230. The array cover comprises apertures which are substantially aligned with open ends of the vent channels 240 of the vent plate 230.

The battery pack 250 comprising the battery array 110 may be incorporated into a vehicle. The vehicle comprises the battery pack 250, which in turn comprises the battery array 110 with the venting system described above.

FIG. 1 illustrates a top view of a known battery venting arrangement 101 that forms part of the battery pack 250. In the example shown in FIG. 1, the battery venting arrangement 101 comprises multiple battery arrays 102 arranged in a grid pattern, with eight arrays 102 shown in a 2x4 configuration. Whilst eight arrays are shown in FIG. 1, other numbers of battery arrays 102, in different arrangements, may be used. In another example, nine arrays may be arranged in a 3x3 configuration.

Along the right side of the battery venting arrangement 101, two vent channels 202 are positioned. These vent channels 202 are oriented horizontally and extend outward from the battery arrays 102. Flow direction arrows 204 indicate the direction of flow through the vent channels 202, showing movement from the battery arrays 102 toward the exterior of the battery pack 250.

This known battery venting arrangement 101 may benefit from enhancements. For example, the configuration of the vent channels 202 is along only one side of the arrangement; venting for battery arrays furthest from the vent channels 202 may be enhanced. Additionally, the orientation of the vent channels 202 may be adapted to more efficiently direct gas flow away from adjacent battery arrays 102.

In the event of a thermal event in one of the battery arrays 102, the gas generated may need to travel across other battery arrays 102 before reaching a vent channel 202. This path may expose neighboring battery arrays 102 to elevated temperatures. Furthermore, the number and placement of vent channels 202 may be modified to provide more efficient venting capacity for rapid gas evacuation, e.g., in case of a more severe thermal event.

Enhancements to this known battery venting arrangement 101 may include redesigning the vent channel layout to provide more direct venting paths for each battery array 102, implementing additional thermal management features, and optimizing the flow direction 204 to minimize heat transfer between battery arrays 102 during venting events.

FIG. 2 illustrates an isometric view of a battery array 110. The battery array 110 comprises an array casing 220 that forms the outer structure of the assembly. The array casing 220 includes a base and sidewalls shaped to receive and house battery cells. Positioned on top of the array casing 220 is a vent plate 230, which covers the upper surface of the battery array 110.

The vent plate 230 includes multiple vent channels 240 arranged in a parallel configuration. These vent channels 240 are depicted as elongated, L-shaped structures that extend across the surface of the vent plate 230. The vent channels 240 are raised channels designed to promote exhaust gas flow to the outer part of the array and pack. The L-shaped configuration of the vent channels 240 may help to direct fluid flow away from the battery array 110.

At the end of each vent channel 240, an aperture 244 is visible. These apertures 244 are positioned along the edge of the vent plate 230, aligning with the termination points of the vent channels 240. The apertures 244 may serve as exit points for the fluid directed through the vent channels 240.

The vent plate 230 may be described as a stamped steel vent plate, providing durability and heat resistance in the venting system. The vent plate 230 is positioned on top of a sheet of silicate material (not shown in FIG. 2). The sheet of silicate material covers the battery cells and includes frangible portions above each cell group. The vent channels 240 in the vent plate 230 are aligned with respective frangible portions of the sheet of silicate material.

An array cover (not shown in FIG. 2) may be positioned on top of the vent plate 230. The array cover comprises apertures which are substantially aligned with open ends of the vent channels 240 of the vent plate 230. These apertures may be provided in a side surface or a top surface of the array cover. The array cover may have a gap between it and the vent plate 230 underneath. The array cover may comprise a valve, hole, or flap to vent through, depending on package constraints and proximity to battery pack vent ports.

A sealing component (not shown in FIG. 2) may be bolted into the assembly to create a sealed section or channel. This sealing component may be resistant to heat, made of a metallic bar structure with either a flame-retardant coating or mica applied. The sealing component may rest on top of the arrays, sealing to a battery pack top cover and creating a channel between the side of the arrays and a battery pack side wall. The sealing component may have uprights or stanchions to prevent hot gas from reaching the center of the pack.

The vent channels 240 are configured to allow fluid flow from cell groups in the battery array 110, through the apertures 244, and out of the battery array 110. This configuration helps to efficiently direct gas flow and prevent thermal propagation between arrays in a battery pack.

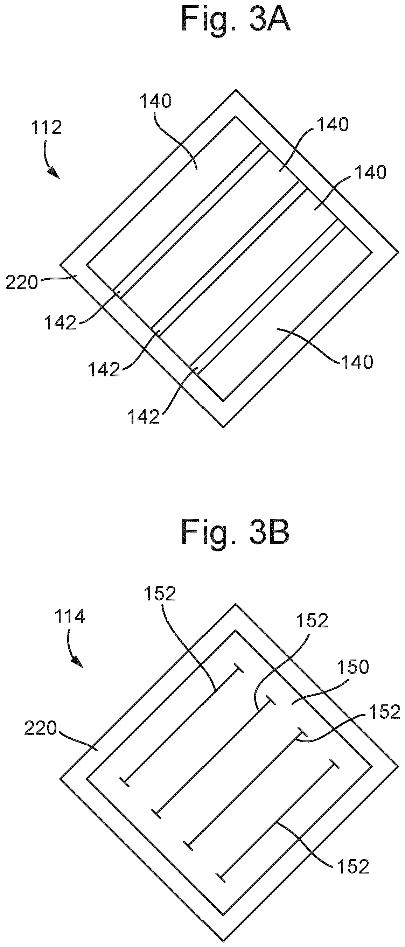

In FIG. 3A-3B, a battery array without cover 112 and a battery array including silicate sheet 114 are depicted, showcasing the internal configuration of the battery array 110. The battery array 110 comprises an array casing 220 that houses multiple battery cells, which are organized into cell groups 140. Each cell group 140 is separated by an insulating layer 142, which extends across the width of the array casing 220. The insulating layer 142 is composed of a silicate material, specifically mica, providing thermal and electrical insulation between the cell groups 140.

The configuration of dividing the battery cells into cell groups 140 and separating them with the insulating layer 142 is crucial for managing heat distribution within the battery array 110. This arrangement helps to prevent thermal propagation between adjacent cell groups 140, thereby enhancing the overall perfromance of the battery array 110.

In FIG. 3B, the battery array including silicate sheet 114 further includes a sheet of silicate material 150, which covers the entire area within the array casing 220. This sheet of silicate material 150, also made of mica, serves as an additional layer of insulation and protection over the battery cells. Notably, the sheet of silicate material 150 includes frangible portions 152 located above each cell group 140. These frangible portions 152 are designed as burst regions, which can break in a controlled manner under specific conditions, such as excessive pressure build-up. This feature allows for the directed release of gases or pressure, further contributing to the performance of the battery array 110.

The inclusion of the sheet of silicate material 150 and the strategic placement of the frangible portions 152 above each cell group 140 are significant in enhancing the protective measures against thermal events within the battery array 110. By covering the battery cells with the mica sheet and incorporating burst regions directly above the cell groups 140, the design effectively manages and mitigates risks associated with overheating and potential thermal runaway scenarios.

Overall, the internal configuration of the battery array 110, as illustrated in FIG. 3A-3B, with its division into cell groups 140, the use of mica as an insulating material in the insulating layer 142 as shown in FIG. 3A, and the protective sheet of silicate material 150 with frangible portions 152 as shown in FIG. 3B, is engineered to enhance the performance, e.g., the thermal management and safety, within the battery pack 250. This configuration ensures that each cell group 140 is both physically and thermally isolated, minimizing the risk of heat transfer between groups and enhancing the operational stability of the battery array 110.

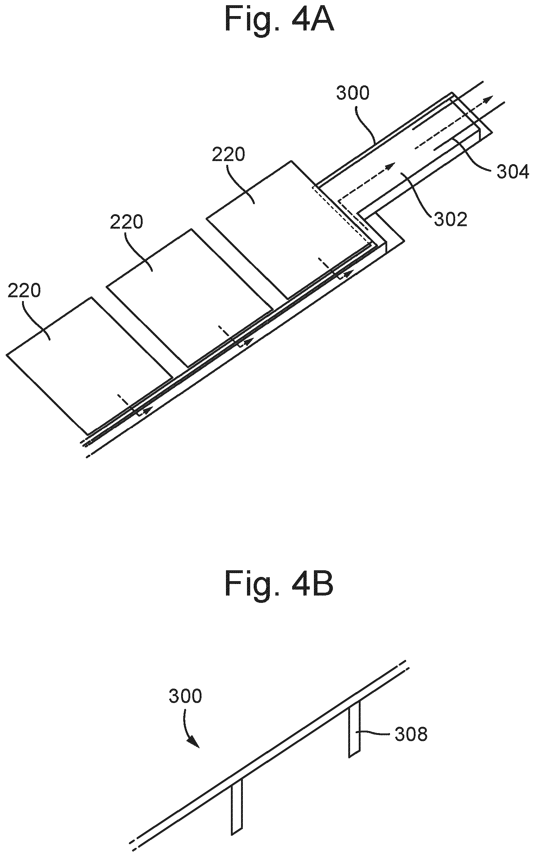

The battery array 110 includes a venting system designed to efficiently direct gas flow and prevent thermal propagation between arrays. FIG. 4A-4B illustrate this venting system design, which comprises a vent guide 300, a vent channel 302, and support stanchions 308.

The vent guide 300 may be a separate component which extends along the length of the array casing 220 and is positioned above it. The vent channel 302 is integrated within the vent guide 300, running along its length. At the end of the vent guide 300, a vent outlet 304 is visible, providing an exit point for the vent channel 302. The array venting components described herein may align with the vent guide 300 such that they may vent out of the vent outlet 304. In some examples, the vent guide 300 may be installed into an existing battery design which does not otherwise provide a path for gas to flow directly to a vent exit or exits, and therefore introduces a path which may guide the vented gas to the outlet 304.

The vent guide 300 and vent channel 302 are designed with a bend, creating an L-shaped profile. This configuration allows the vent outlet 304 to be positioned at a different orientation from the main body of the vent guide 300. The vent channel 302 follows this bend, ensuring continuous flow from the array casing 220 to the vent outlet 304.

Support stanchions 308 extend downward from the vent guide 300 and provide structural support and maintain the position of the vent guide 300 relative to the array casing 220. The support stanchions 308 may provide a seal between the array casings 220 such that gas may only pass through the vents and out of the vent channel 302.

The vent plate 230 of the battery array 110 includes vent channels 240 that are shaped to direct fluid flow away from the battery array 110. These vent channels 240 may be substantially L-shaped, similar to the configuration of the vent guide 300 and vent channel 302. The vent channels 240 in the vent plate 230 may be described as raised channels, designed to promote exhaust gas flow to the outer part of the array and pack.

A sealing component may be bolted into the assembly to create a sealed section or channel. This sealing component may be resistant to heat, made of a metallic bar structure with either a flame-retardant coating or mica applied. The sealing component may rest on top of the arrays, sealing to the battery pack 250 top cover and creating a channel between the side of the arrays and the battery pack 250 side wall.

The sealing component may run all the way to the battery pack 250 vents or just along the top of the arrays. The sealing component may have uprights or stanchions to prevent hot gas from reaching the center of the pack.

In alternative or additional configurations, the venting may come out of the top cover of the battery pack 250, with the vent guide 300 repositioned accordingly. This flexibility in design allows for adaptation to different battery pack 250 configurations and space constraints.

The vent plate 230 may be described as a stamped steel vent plate, providing durability and heat resistance in the venting system. The overall design of the venting system, including the vent guide 300, vent channel 302, support stanchions 308, and the configuration of the vent plate 230, works together to efficiently direct gas flow away from the battery arrays 102 and prevent thermal propagation between arrays in the battery pack 250.

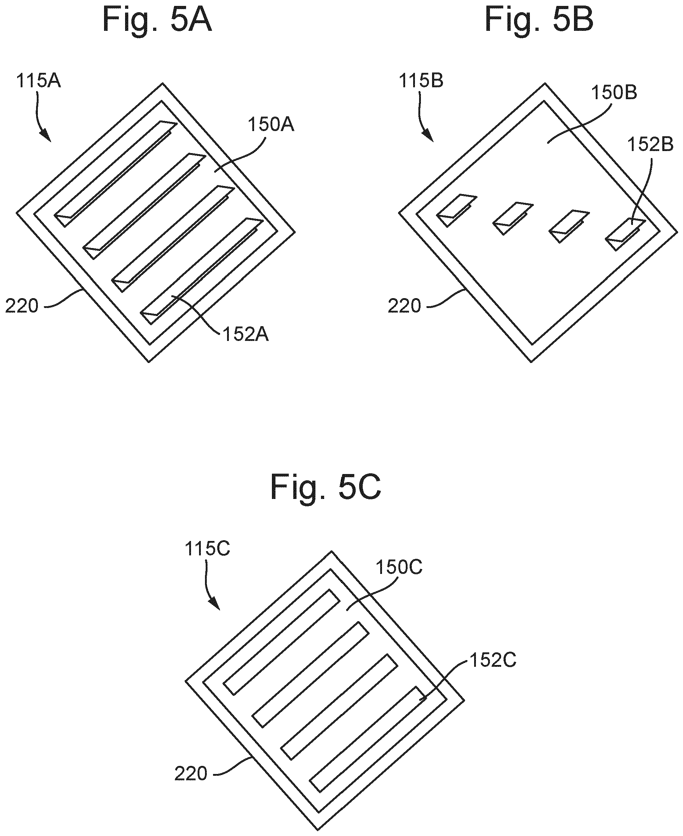

FIGS. 5A-5C illustrate orthogonal top views of three different vent configurations for an array casing 220. These configurations showcase various designs for the sheet of silicate material and its frangible portions, each offering unique characteristics for venting and thermal management within the battery array 110.

FIG. 5A shows a first vent configuration 115A where the array casing 220 includes a first sheet of silicate material 150A. The first sheet of silicate material 150A extends across the vent plate 220 and includes a first frangible portion 152A. The first frangible portion 152A takes the form of a series of wide flaps which reach almost all (e.g., 90%) of the way across the width of the first sheet of silicate material 150A. This configuration allows for a large venting area when the flaps open, potentially providing rapid pressure relief in case of a thermal event.

FIG. 5B depicts a second vent configuration 115B where the array casing 220 includes a second sheet of silicate material 150B. The second sheet of silicate material 150B extends across the vent plate 220 and includes a second frangible portion 152B. The second frangible portion 152B is designed as a series of narrow flaps which do not reach across the width of the second sheet of silicate material 150B. This design may offer more controlled venting, potentially allowing for a more gradual release of pressure or gases.

FIG. 5C illustrates a third vent configuration 115C where the array casing 220 includes a third sheet of silicate material 150C. The third sheet of silicate material 150C extends across the vent plate 220 and includes a third frangible portion 152C. The third frangible portion 152C is composed of a series of frangible apertures which reach almost all (e.g., 90%) of the way across the width of the third sheet of silicate material 150C. This configuration may provide a balance between rapid venting and controlled release, with the apertures potentially opening in a sequential manner based on pressure buildup.

In each configuration, the vent channels of the vent plate 230 are arranged to direct flow from an interior of the array casing 220 and toward the respective frangible portions (152A, 152B, 152C). The frangible portions may be aligned with cell groups therebelow, ensuring that any venting occurs directly above the affected cells.

The first sheet of silicate material 150A, the second sheet of silicate material 150B, and the third sheet of silicate material 150C may all be made of mica, providing excellent thermal insulation and electrical isolation properties. The use of mica as the material for these sheets allows for effective heat management within the battery array 110 while also serving as a protective layer for the battery cells.

The different configurations of the frangible portions (152A, 152B, 152C) offer varying levels of venting capacity and control. The wide flaps of the first frangible portion 152A may provide rapid and extensive venting, suitable for scenarios where quick pressure relief is desired. The narrow flaps of the second frangible portion 152B may offer more controlled venting, potentially useful in situations where a more gradual release of pressure or gases is desired. The frangible apertures of the third frangible portion 152C may provide a balance between rapid venting and controlled release, potentially allowing for a staged opening of vents based on the level of the thermal event.

The frangible portions (152A, 152B, 152C) may be formed of weakened or thinned material, for example thinner sections which may burst or break through under pressure.

These different vent configurations (115A, 115B, 115C) provide flexibility in designing the battery array 110 to meet specific performance requirements. The choice of configuration may depend on factors such as the expected thermal characteristics of the battery cells, the overall battery pack 250 design, and the intended application of the battery array 110.

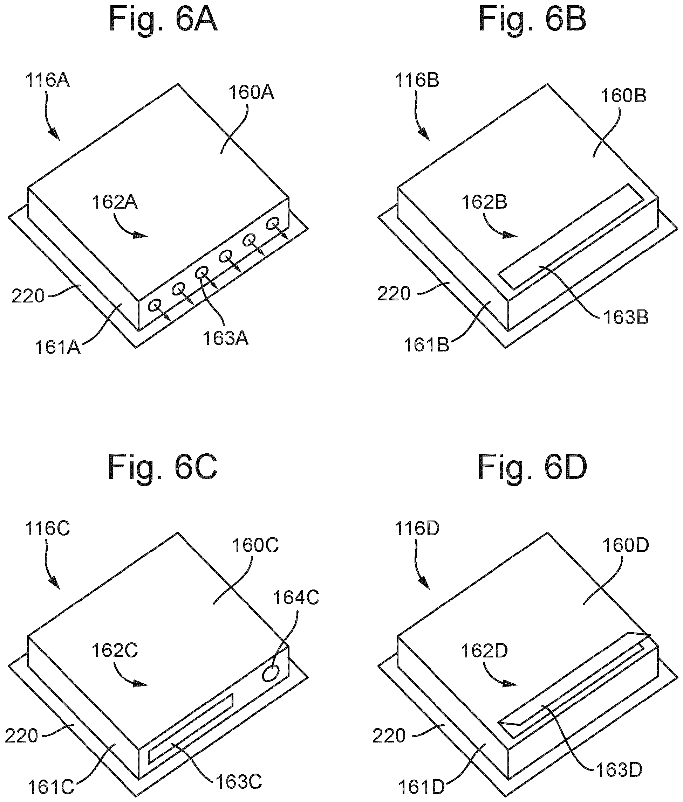

FIGS. 6A-6D illustrate isometric views of different configurations of battery array vent plates showing various vent arrangements. These configurations demonstrate different approaches to venting and contribute to the overall venting system of the battery array 110.

FIG. 6A shows an array casing 220 with a first array cover arrangement 116A positioned on top of a first array cover 160A. The first array cover 160A includes a first top surface 162A. A first sidewall 161A extends from the array casing 220. Multiple first apertures 163A are arranged in a row along the first sidewall 161A. This configuration allows for venting through the side of the array cover, which may be beneficial in certain battery pack 250 layouts.

FIG. 6B depicts the array casing 220 with a second array cover arrangement 116B positioned on top of a second array cover 160B. The second array cover 160B includes a second top surface 162B. A second sidewall 161B extends from the array casing 220. A top vent slot 163B is located in the second top surface 162B. This arrangement provides venting through the top of the array cover, which may be advantageous in situations where side venting is not feasible or desirable.

FIG. 6C illustrates the array casing 220 with a third array cover arrangement 116C positioned on top of a third array cover 160C. The third array cover 160C includes a third top surface 162C. A third sidewall 161C extends from the array casing 220. A vent slot 163C and a vent hole 164C are positioned in the third sidewall 161C. This configuration combines both slot and hole venting on the side of the array cover, potentially offering a balance between venting capacity and controlled gas flow.

FIG. 6D shows the array casing 220 with a fourth array cover arrangement 116D positioned on top of a fourth array cover 160D. The fourth array cover 160D includes a fourth top surface 162D. A fourth sidewall 161D extends from the array casing 220. A top-mounted vent opening 163D is located in the fourth sidewall 161D. This design features a larger vent opening on the side of the array cover, which may provide increased venting capacity compared to smaller apertures or slots.

In each configuration, the apertures of the array cover are positioned to direct fluid flow away from the battery array 110. This positioning helps to channel vented gases or fluids away from other components of the battery pack 250, reducing an effect on adjacent battery arrays.

The array cover in each configuration may have a gap between it and the vent plate 230 underneath. This gap can serve as a plenum, allowing gases to collect and distribute before being vented through the apertures. The size of this gap may be adjusted to enhance venting performance based on the specific requirements of the battery array 110.

The array cover may comprise a valve, hole, or flap to vent through, depending on the specific venting needs and package constraints of the battery pack 250. For example, the vent slot 163C in FIG. 6C could be fitted with a valve or flap mechanism to provide controlled venting under certain conditions.

As shown in the different configurations, the apertures of the array cover may be provided in a side surface of the array cover, such as the first apertures 163A in FIG. 6A, or in a top surface of the array cover, such as the top vent slot 163B in FIG. 6B. The choice between side and top venting may depend on factors such as the overall battery pack 250 design, space constraints, and desired venting characteristics.

These various array cover configurations provide flexibility in designing the venting system for the battery array 110. The choice of configuration may be based on factors such as the expected thermal behavior of the battery arrays 102, the overall layout of the battery pack 250, and the specific venting requirements of the application. By offering multiple venting options, these configurations contribute to the performance of the overall battery venting arrangement 101.

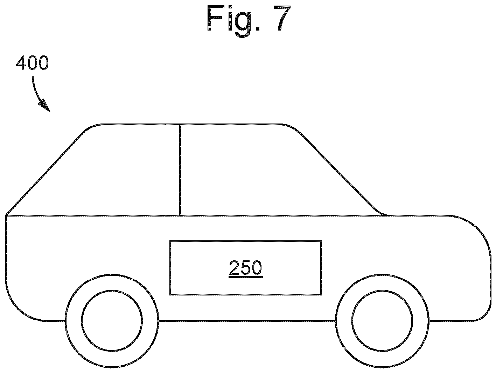

FIG. 7 illustrates a side view outline of a vehicle 400. The vehicle 400 incorporates the battery pack 250, which is positioned in the middle of the vehicle's body. The battery pack 250 includes the battery array 110 with the enhanced venting system described in previous sections.

The integration of the battery pack 250 with the enhanced venting system into the vehicle 400 provides several benefits for vehicle performance. The battery pack 250 is designed to efficiently manage thermal events and prevent thermal propagation between arrays, enhancing the overall performance of the vehicle 400.

The battery array 110 within the battery pack 250 includes the array cover with apertures configured to direct fluid flow away from the battery pack 250. This configuration helps to channel vented gases or fluids away from other components of the vehicle 400, reducing the risk of damage to adjacent systems or components in the event of a thermal incident.

The positioning of the battery pack 250 in the middle of the vehicle 400 may provide optimal weight distribution, contributing to better vehicle handling and performance. The compact design of the battery array 110 with its efficient venting system allows for effective space utilization within the vehicle 400, maximizing the energy storage capacity without compromising on safety features.

The enhanced venting system of the battery array 110, including the vent plate 230 with vent channels 240 and the array cover with strategically placed apertures, contributes to the overall thermal management of the vehicle 400. By efficiently directing heat and gases away from the battery arrays 102 and other vehicle components, the system helps maintain operating temperatures for the battery pack 250, which may lead to enhanced battery performance and longevity.

The integration of the battery pack 250 with its advanced venting system into the vehicle 400 demonstrates a comprehensive approach to electric vehicle design, where safety features are seamlessly incorporated into the vehicle's architecture. This integration may enhance the overall reliability and durability of the vehicle 400, providing users with a safer and more efficient electric vehicle experience.

Features of any of the examples or embodiments outlined above may be combined to create additional examples or embodiments without losing the intended effect. It should be understood that the description of an embodiment or example provided above is by way of example only, and various modifications could be made by one skilled in the art. Furthermore, one skilled in the art will recognise that numerous further modifications and combinations of various aspects are possible. Accordingly, the described aspects are intended to encompass all such alterations, modifications, and variations that fall within the scope of the appended claims.

## Claims

1. A battery array comprising a housing and battery cells, the housing having a base and sidewalls shaped to receive and house the battery cells, wherein the battery cells of the battery array are divided into cell groups and an insulating layer is provided between each group of battery cells in the battery array, and wherein the battery array further comprises a sheet of silicate material which covers the battery cells, the sheet of silicate material including a frangible portion above each cell group, the battery array further comprising a vent plate positioned on top of the sheet of silicate material such that the sheet of silicate material is substantially enclosed between the vent plate and the battery cells, wherein the vent plate includes vent channels which are aligned with respective frangible portions of the sheet of silicate material.

2. The battery array of claim 1 further comprising an array cover positioned on top of the vent plate such that the vent plate is substantially enclosed between the sheet of silicate material and the array cover, the array cover comprising apertures which are substantially aligned with open ends of the vent channels of the vent plate.

3. The battery array of claim 2, wherein the apertures of the array cover are provided in a side surface of the array cover.

4. The battery array of claim 2, wherein the apertures of the array cover are provided in a top surface of the array cover.

5. The battery array of any preceding claim, wherein the vent channels of the vent plate are shaped to direct fluid flow away from the battery array.

6. The battery array of any preceding claim, wherein the vent channels of the vent plate are substantially L-shaped.

7. The battery array of any one of claims 2-6, wherein the apertures of the array cover are positioned to direct fluid flow away from the battery array.

8. The battery array of any preceding claim, wherein the sheet of silicate material is a mica sheet.

9. The battery array of any preceding claim, wherein the insulating layer between each group of battery cells comprises a silicate material.

10. The battery array of claim 9, wherein the silicate material of the insulating layer between each group of battery cells comprises mica.

11. The battery array of any preceding claim, wherein the insulating layer between each group of battery cells is provided between groups of three or four battery cells.

12. The battery array of any preceding claim, wherein each frangible portion of the sheet of silicate material comprises a burst region.

13. A battery pack comprising the battery array of any one of claims 1-12.

14. A battery pack comprising the battery array of claim 7, wherein the apertures of the array cover are further configured to direct fluid flow away from the battery pack.

15. A vehicle comprising the battery pack of claim 13 or 14.
